# EUROPEAN PATENT SPECIFICATION

(11) **EP 1 010 337 B1**
(45) Date of publication and mention of the grant of the patent: **13.07.2005**
(21) Application number: 97944508.7
(22) Date of filing: 26.09.1997
(51) Int. Cl.: H04Q 7/22

(54) **METHOD AND APPARATUS FOR PROVIDING AN ALERT WITH INFORMATION SIGNAL BETWEEN A MOBILE SWITCHING CENTER AND A BASE STATION**
VERFAHREN UND VORRICHTUNG ZUM ZUFÜHREN EINES WARNMELDUNGSIGNALS MIT INFORMATIONEN ZWISCHEN EINER MOBILEN VERMITTLUNGSANLAGE UND EINER BASISSTATION
PROCEDE ET DISPOSITIF SERVANT A PRODUIRE UN SIGNAL D'ALERTE AVEC INFORMATION ENTRE UN CENTRE DE COMMUTATION MOBILE ET UNE STATION DE BASE

(30) Priority: 30.09.1996 US 27217 P; 31.01.1997 US 792554; 14.02.1997 US 40319 P; 27.05.1997 US 863457
(43) Date of publication of application: 21.06.2000
(73) Proprietor: QUALCOMM INCORPORATED, San Diego, CA 92121-1714 (US)
(72) Inventor: KRISHNAMURTHI, Rajeev, San Diego, CA 92130 (US); MOHANTY, Bibhu, P., San Diego, CA 92122 (US); QUICK, Roy, R., Jr., San Diego, CA 92107 (US)
(74) Representative: Dunlop, Hugh Christopher
(86) International application number: PCT/US1997/017379
(87) International publication number: WO 1998/015072

(56) References cited:
- WO-A-91/03137
- WO-A-96/28944
- WO-A-97/16038
- WO-A-97/23108
- WO-A-97/36434
- DE-A- 3 333 587
- DE-A- 4 430 793
- VARMA ET AL.: "Integrated Alerting and System Broadcast Channel for a Wireless Access System" IEEE TRANSACTIONS ON VEHICLE TECHNOLOGY, vol. 45, no. 1, 1 February 1996, USA, pages 157-163, XP000594687
- ELIXMANN ET AL.: "product innovation with state charts" PHILIPS TELECOMMUNICATIONS REVIEW, vol. 51, no. 2, 1 August 1993, NURNBERG,DE, pages 48-55, XP000426365

## Description

### BACKGROUND OF THE INVENTION

### I. Field of the Invention

The present invention relates to spread spectrum telecommunications systems. More particularly, the present invention relates to a novel and improved messaging method and apparatus in a CDMA communication system.

### II. Description of the Related Art

The use of code division multiple access (CDMA) modulation techniques is one of several techniques for facilitating communications in which a large number of system users are present. Although other techniques such as time division multiple access (TDMA), frequency division multiple access (FDMA), and amplitude modulation (AM) schemes such as amplitude companded single sideband (ACSSB) are known, CDMA has significant advantages over these other techniques. The use of CDMA techniques in a multiple access communication system is disclosed in U.S. Pat. No. 4,901,307, entitled "SPREAD SPECTRUM MULTIPLE ACCESS COMMUNICATION SYSTEM USING SATELLITE OR TERRESTRIAL REPEATERS," assigned to the assignee of the present invention.

In the CDMA cellular system, a large number of mobile telephone system users, each having a transceiver, communicates through satellite repeaters or terrestrial stations which are also referred to as cells. Each cell includes a physical plant called a base station. A cell covers a limited geographic area and routes calls carried over cellular telephones to and from a telecommunication network via a mobile switching center. When a cellular telephone user moves into the geographic area of a new cell, the routing of that user's call may be eventually made through the new cell by a process called a "handoff."

A cellular telephone or, more specifically, a mobile station, broadcasts a signal that is received by a base station. The signal is then relayed to a mobile switching center which in turn routes the signal to the public switched telephone network and to telephone lines or other mobile stations. Similarly, a signal may be transmitted from the public switched telephone network to a mobile station via a base station and a mobile switching center. The communications channel allocated for communication of information between the mobile station and the base station is called the traffic channel.

The interface between the mobile station and the base station is referred to as the Air-Interface. The telecommunications industry association (TIA) has provided a standard for CDMA call processing on the Air-Interface entitled "IS-95-A Mobile Station - Base Station Compatibility Standard for Dual Mode Wideband Spread Spectrum Cellular System," hereinafter IS-95-A. The interface between the base station and the mobile switching center is referred to as the A-Interface. The TIA has provided for call processing on the A-Interface through the standard provided in "IS-634 Mobile Switching Center - Base Station Interface for Public 800 MHz." IS-95-A and IS-634 both define the messages and signals that are sent on their respective interfaces for the operation of a CDMA cellular telephone call.

WO-A-97/23108 describes a CDMA interface to a subscriber unit and a GSM A-interface to a GSM mobile switching center. A transparent message transport enables signalling messages in the GSM A-interface protocol to be exchanged between the mobile switching center and the subscriber unit.

The call flow in a CDMA environment requires processing on both the Air-Interface and the A-Interface. The successful progression of a call requires that the proper messages and signals are sent at the right times on both the Air-Interface and the A-Interface. The IS-634 standard is being developed to provide for call processing on the A-Interface. A number of problems and deficiencies are present in IS-634 which currently does not support some of the necessary operations on the A-Interface. Some of these problems and deficiencies are recognized and solved by the present invention in the manner described below.

### SUMMARY OF THE INVENTION

The present invention is a novel and improved method and apparatus for providing a new message on the interface between a mobile switching center and a base station, also known as the A-Interface, of a cellular telephone system. The present invention recognizes that the A-Interface, as presently defined by the IS-634 standard, does not support some of the operations necessary for reliable call processing. Introduction of the new message will provide support for required functionality on the A-Interface.

The present invention recognizes that improvements are needed for the A-Interface to reliably handle the call waiting and the hard handoff procedures. In addition, a better technique is needed for resolving a glare condition. An Alert With Information Message is introduced on the A-Interface to improve the operation of these procedures.

According to first and second aspects of the invention, there are provided a cellular communication system and a method for messaging between a mobile switching centre and a base station as set forth in claims 1 and 3, respectively.

Using the call waiting feature of the first and second aspects, a mobile station may have a first party of a public switched telephone network put on hold while being connected to a second party. If the second party hangs up, then according to the current procedure, a Release/Clear Message (or an equivalent message) is sent to the mobile station, causing the mobile station to release its traffic channel. A new traffic channel must then be reestablished to reconnect the mobile with the first party. The present invention recognizes that the current procedure is unreliable in that difficulties may arise in the process of reconnecting the mobile with the first party. Moreover, Air-Interface resources are used inefficiently as the current procedure requires the release of the traffic channel and the reassignment of a new channel. To overcome these shortcomings, an Alert With Information Message is sent on the A-Interface to the base station, triggering the transmittal of an Alert With Information Message on the Air-Interface. Upon receipt of the Alert With Information Message, the mobile station is prompted to transmit a Connect Message to the mobile switching center via a base station. The mobile switching center then reconnects the first party to the mobile station, without the need to reestablish a new traffic channel.

According to third and fourth aspects of the invention, there are provided a cellular communication system and a method for messaging between a mobile switching centre and a base station as set forth in claims 12 and 13, respectively.

A hard handoff occurs in a cellular system when a mobile station moves from the coverage area of one base station to the coverage area of another base station. During a mobile station terminated call, in order for the mobile to undertake handoff, it must first receive an Alert With Information Message transmitted by the base station. Under current procedure, the Alert With Information Message is generated and transmitted solely by the base station in whose coverage area the mobile is currently located. The present invention recognizes that the current procedure may cause the hard handoff procedure to be unreliable. If the mobile moves from the coverage area of a first base station to the coverage area of a second base station, the mobile station may never receive the Alert With Information Message from the first base station, resulting in a dropped call. Thus, the present invention, according to the third and fourth aspects, provides for an Alert With Information Message to be generated and transmitted by the mobile switching center. While the mobile station is moving from the coverage area of the first base station to that of the second base station, the mobile switching center transmits the Alert With Information Message to the second base station. The second base station in turn transmits an Alert With Information Message to the mobile station. Having received the Alert With Information Message, handoff can now proceed without the call being dropped.

According to fifth and sixth aspects of the invention, there are provided a telecommunications messaging system and a method for messaging between a mobile switching centre and a base station as set forth in claims 6 and 9, respectively.

A mobile subscriber may attempt to originate a call while another party is attempting to call the same mobile subscriber, resulting in a glare condition. The Air-Interface standard, IS-95-A, provides the mobile the option of aborting the call that it is originating and responding to the call that it is receiving. However, the present invention recognizes that the mobile may not successfully receive the call because the base station is not configured to transmit the proper messages to the mobile when a glare condition occurs. In order for the mobile subscriber to respond to a call, it is necessary for the mobile to receive an Alert With Information Message. However, the standard currently does not address this situation. As a result, the call may be dropped. The present invention, according to the fifth and sixth aspects, recognizes that the resolution of the glare condition should be undertaken at the mobile switching center. The mobile switching center, upon receiving a message indicative of a mobile originating a call and subsequently receiving a message indicative of the same mobile receiving a call, should recognize that the mobile is proceeding with receiving a call. The mobile switching center should then transmit an Alert With Information Message to the base station, triggering the base station to transmit an Alert With Information Message to the mobile station. As the Alert With Information Message is received by the mobile station, the glare condition is resolved without the call being dropped.

Benefits and advantages of the present invention will become apparent from the following description of the preferred embodiment when it is considered with reference to the drawings.

### BRIEF DESCRIPTION OF THE DRAWINGS

The features, objects, and advantages of the present invention will become more apparent from the detailed description set forth below when taken in conjunction with the drawings in which like reference characters identify correspondingly throughout and wherein:
FIG. 1 is a block diagram presenting a schematic overview of an exemplary CDMA cellular telephone system in accordance with the present invention;
FIG. 2 is a block diagram illustrating an exemplary call-waiting scenario according to the current IS-634 standard;
FIG. 3 is a block diagram illustratmg a call-waiting scenario according to the present invention;
FIG. 4 is a flow chart illustrating an exemplary embodiment of the processing steps involved in call-waiting as implemented by the processing elements of FIG. 3;
FIG. 5 is a block diagram illustrating an exemplary hard handoff scenario in a cellular telephone system;
FIG. 6 is a state diagram illustrating the states of a mobile station in a mobile station terminated call;
FIG. 7 is a block diagram illustrating an exemplary embodiment of the hard handoff scenario according to the present invention;
FIG. 8 is a flow chart illustrating an exemplary embodiment of the processing steps involved in hard handoff as implemented by the processing elements of FIG. 7;
FIG. 9 is a block diagram illustrating an exemplary embodiment of the processing elements involved in the resolution of a glare condition; and
FIG. 10 is a flow diagram illustrating the occurrence and the resolution of a glare condition.

### DETAILED DESCRIPTION OF THE PREFERRED EMBODIMENTS

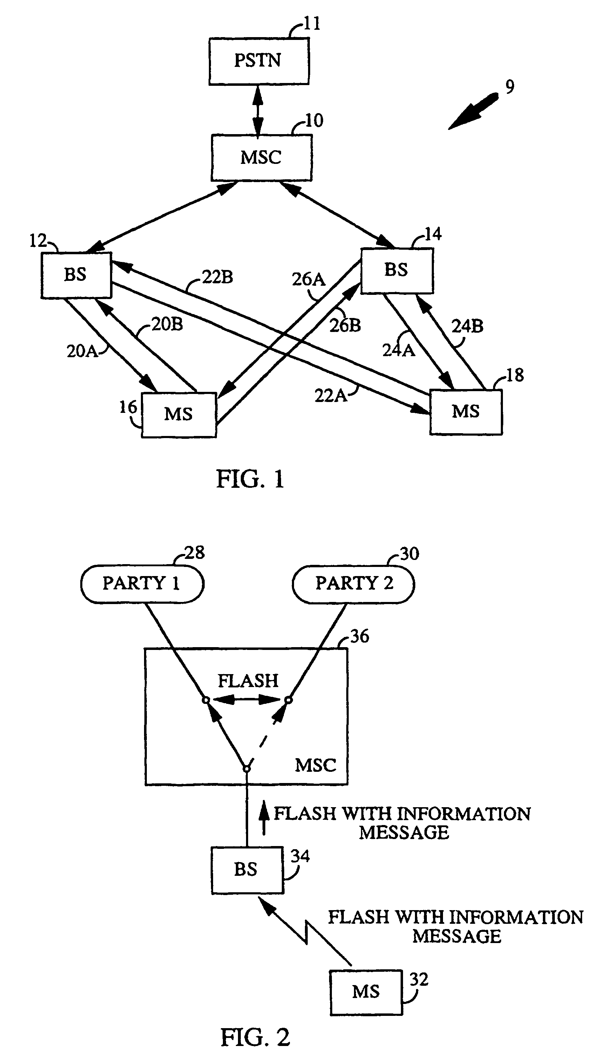

An exemplary CDMA cellular mobile telephone system in which the present invention is embodied is illustrated in FIG. 1. The CDMA cellular telephone system is indicated generally by **9** and includes a mobile switching center (MSC) **10,** also referred to as a mobile telephone switching office (MTSO), that includes interface and processing circuitry for providing system control to the base stations. The MSC **10** routes telephone calls from a public switched telephone network (PSTN) **11** to the appropriate base station for transmission to the appropriate mobile station. The MSC **10** also controls the routing of calls from the mobile stations via one or more base stations to the PSTN **11.** In addition, the MSC **10** may direct calls between mobile stations via the appropriate base stations. The MSC **10** may be coupled to the base stations by various conventional means, such as dedicated telephone lines, optical fiber links, or by radio frequency communications.

It should be understood that although the present invention is described herein within the context of a CDMA cellular communications system, it is equally applicable to other types of communication systems, such as the personal communication system (PCS). Furthermore, systems utilizing other well known transmission modulation schemes such as TDMA and FDMA as well as other spread spectrum systems may employ the present invention.

In FIG. 1, two exemplary base stations **(BSs), 12** and **14,** along with two exemplary mobile stations (MSs) **16** and **18,** each including a cellular telephone, are illustrated. Arrows **20a** and **20b** represent forward and reverse code channels that define a possible communication link between BS 12 and MS **16.** Arrows **22a** and **22b** define a possible communication link between BS **12** and MS **18.** Similarly, BS **14** can establish a two-way communication link with MS **18** as represented by arrows **24a** and **24b** and with MS 16 as represented by the arrows **26a** and **26b.**

As previously mentioned, the interface between BSs **12** and **14** and MSs **16** and **18** is called the Air-Interface, and in the exemplary embodiment, call processing on the Air-Interface is governed by IS-95-A. Also as previously mentioned, the interface between MSC **10** and BSs **12** and **14** is called the A-Interface, and call processing on the A-Interface is governed by IS-634. The present invention recognizes that the A-Interface as currently defined by IS-634 lacks support for some of the necessary functionality for reliable call processing. In addition, the present invention recognizes that introduction of a new message on the A-Interface will cure some of the deficiencies of the A-Interface.

An exemplary procedure in which deficiencies are recognized on the A-Interface is the call waiting procedure. Call waiting is one feature available to the CDMA cellular subscriber. The call waiting feature allows a cellular subscriber to toggle between two parties on the telephone network. Call waiting may be provided in a CDMA telephone system according to the techniques disclosed in US Patent No. 6,292,662 entitled "Method and System for processing telephone calls involving two digital wireless subscriber units that avoid double vocoding, which is assigned to the assignee of the present invention.

An exemplary call waiting scenario is illustrated in FIG. 2. In FIG. 2, party 1 28 and party 2 **30** are two parties of a PSTN. A call has been established between MS **32** and party 1 **28.** A traffic channel has been set up between MS **32** and BS **34** on the Air-Interface. Furthermore, BS **34** is connected to MSC **36** on the A-Interface by any of various conventional means as described above.

If party 2 **30** calls MS **32** while MS **32** is communicating with party 1 **28,** MSC **36** will send signaling data to BS **34** indicating that another party is attempting to contact MS **32.** The means for combining traffic data and signaling data is described in detail in U.S. Pat. No. 5,511,073, entitled "METHOD AND APPARATUS FOR THE FORMATTING OF DATA FOR TRANSMISSION," assigned to the assignee of the present invention. To inform MS **32** that another call is coming in, an alerting signal is relayed by BS **34** to MS **32** either by a Flash With Information message or an inband tone. Then, MS **32** can invoke the call waiting feature by pushing a specific key on the MS keypad. This causes the generation of a Flash With Information Message, which is sent on the Air-Interface to BS **34,** which in turn relays the Flash With Information Message on the A-Interface to MSC **36.** MSC **36** then connects party 2 **30** to MS **32** while putting party 1 on hold. Thereafter, MS **32** may toggle between party 1 **28** and party 2 **30** by pushing the key on the keypad to cause the generation of the Flash With Information Message. Each time MSC **36** receives the Flash With Information Message, it connects MS **32** to the party that was previously put on hold and puts on hold the party that was previously on the line.

Referring still to FIG. 2, assume that party 1 **28** is on hold and MS **32** is connected to party 2 **30.** If party 2 **30** hangs up, then according to the current procedure, the network which is servicing party 2 generates a Release Message. This Release Message propagates to MSC **36,** which then sends the Release Message to BS **34** on the A-Interface. BS **34** in turn sends a Release Message to MS **32** on the Air-Interface to cause MS **32** to release its traffic channel. MSC **36** then signals to BS **34** that party 1 **28** is attempting to contact MS **32.** This causes BS **34** to send a Paging message to MS **32** to indicate that a call is incoming. In response, MS **32** generates a Paging Response Message which is transmitted to BS **34.** BS **34** then transmits the Paging Response Message to MSC **36.** On receipt of a Paging Response Message, MSC **36** assigns a new traffic channel to MS **32** and MS **32** is reconnected to party 1 **28.**

The present invention recognizes that this procedure has several shortcomings. First, it does not efficiently use the Air-Interface resource, since it requires the release of the traffic channel, re-paging of MS **32** and the assignment of a new traffic channel. Further, the need to obtain a new traffic channel makes it difficult to reestablish the connection between MS **32** and party 1 **28.** If MS **32** moves away from BS **34** from which it is released, the page from MSC **36** may not be received by MS **32.** At the very least, this increases the amount of time that party 1 **28** has to wait for the reconnection with MS **32.** There is also the possibility that the connection between MS **32** and party 1 **28** cannot be reestablished, resulting in a dropped call. A better procedure is needed to handle the procedure for releasing party 2 **30** from MS **32** wherein MS **32** is using the call waiting feature.

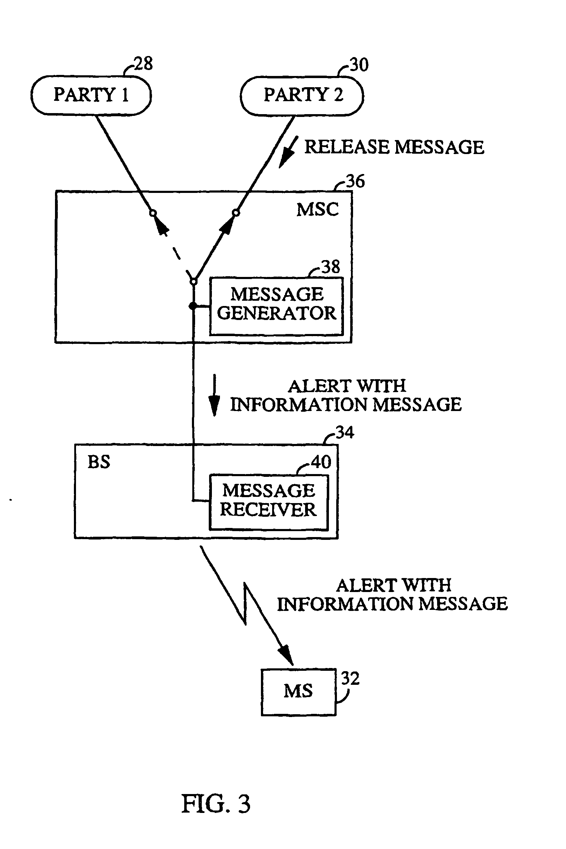

To overcome the shortcomings, the present invention introduces a new message for the A-Interface. A preferred embodiment of the present invention is illustrated in FIG. 3. The preferred embodiment provides for a new message, an Alert With Information Message, on the A-Interface. The Alert With Information Message is currently available on the Air-Interface under IS-95-A. According to IS-95-A, the Alert With Information Message is sent by a base station to a mobile station to cause the mobile to ring and to transition from a Conversation State to a Waiting For Answer State, expecting the mobile user to intervene. By providing for an Alert With Information Message on the A-Interface, the mobile switching center can better control the progress of the call waiting procedure.

Referring to FIG. 3, assume again that party 1 **28** is on hold and MS **32** is in communication with party 2 **30.** If party 2 **30** then hangs up, the network servicing party 2 **30** generates a Release Message as described above. In the preferred embodiment, when the Release Message comes from the network, MSC **36** intercepts it, and message generator **38** in MSC **36** generates an Alert With Information Message signal, which is sent to BS **34** on the A-Interface. Message receiver **40** in BS **34** receives the Alert With Information Message, and BS **34** in turn sends an Alert With Information Message to MS **32** on the Air-Interface. When MS **32** receives the Alert With Information Message, it generates an alerting signal in the mobile and waits for the subscriber to answer. When the subscriber answers by pressing a key on keypad of MS **32,** a Connect Message generated by MS **32** is sent to BS **34** and forwarded to MSC **36.** On receiving the Connect Message, MSC **36** connects party 1 **28** to MS **32.**

In the preferred embodiment, by not permitting the Release Message (or a Clear Message) from the network to be sent to MS **32,** MS **32** is not caused to release the traffic channel when party 2 **30** hangs up. As a result, there is no need to expend additional Air-Interface resources for the assignment of a new traffic channel. Furthermore, the preferred embodiment does not require MS **32** to be paged following the release of the traffic channel to indicate that party 1 **28** is still waiting to be reconnected with MS **32.** Consequently, the risk that MS **32** will move away from the coverage area of BS **34** and not receive the page is eliminated.

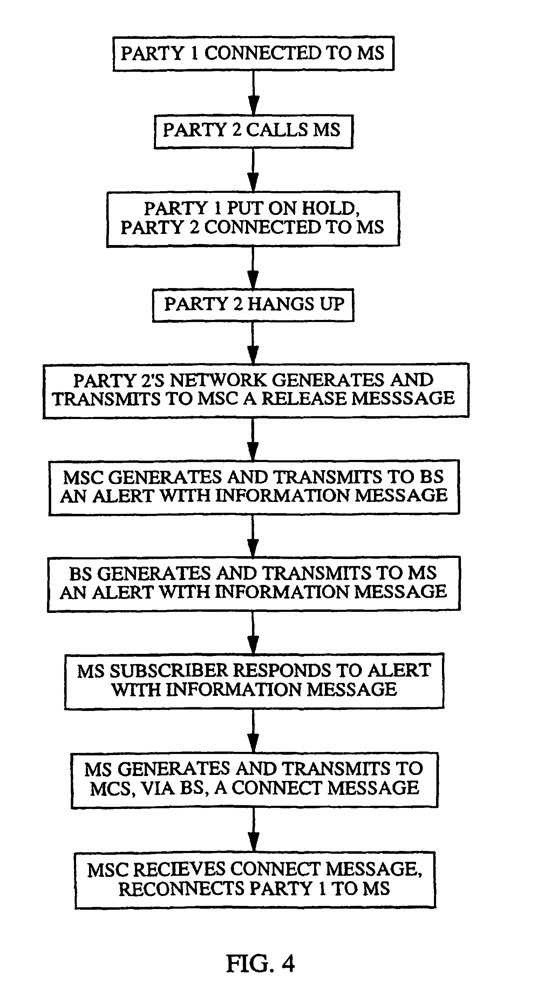

A brief illustration of the steps involved in call waiting as described in the embodiment above is shown in FIG. 4. FIG. 4 shows a flow chart illustrating some of the steps involved in the processing as discussed with reference to FIG. 3.

Another procedure in which deficiencies are recognized on the A-Interface is the handoff procedure. In a cellular communication system, a handoff must take place when a mobile station moves from the coverage area of one base station to another base station. A geographic area in a cellular system is divided up into cells. Each cell is serviced by a corresponding base station. In a hard handoff environment, as a mobile station moves from one cell to another cell, communication with the original base station is terminated before communication with the subsequent base station is established. In a soft handoff environment, communication with the subsequent base station is established before terminating communication with the original base station. U.S. Patent No. 5,267,261, which is assigned to the assignee of the present invention, discloses a method and system for providing soft handoff.

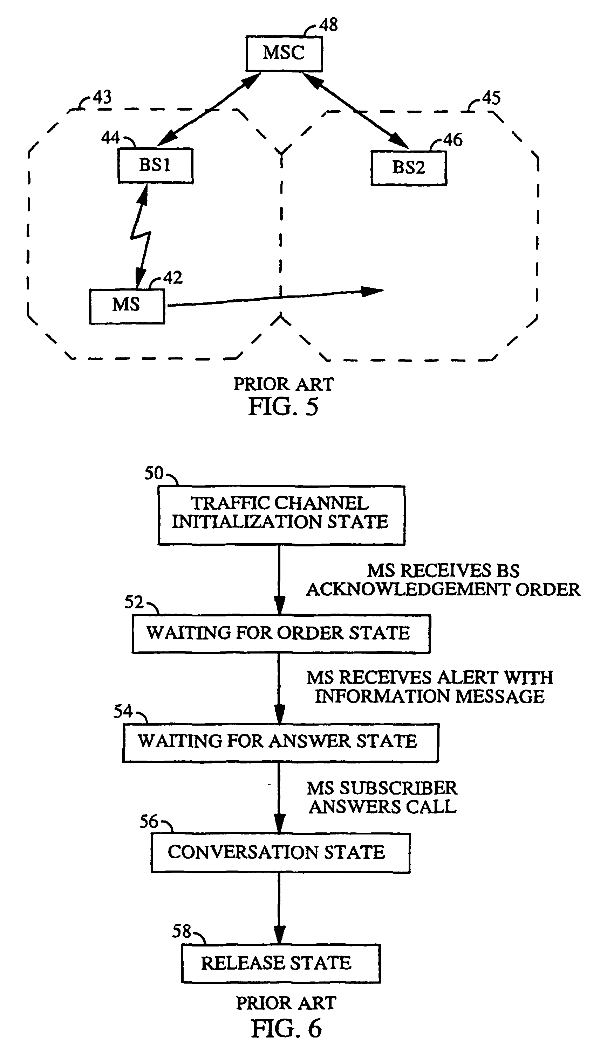

The hard handoff procedure in a mobile terminated call may be understood with reference to FIGS. 5 and 6. As illustrated in FIG. 5, as MS **42** moves from the coverage area of BS1 **44** to BS2 **46,** a connection needs to be established between MS **42** and BS2 **46** while MS **42** needs to be disconnected from BS1 **44.** Both BS1 **44** and BS2 **46** are shown to be connected to MSC **48** in FIG. 5. However, it should be understood that a hard handoff can also occur when a mobile station moves from the control of one mobile switching center to another. In fact, the different mobile station controllers may support different modulation techniques such as TDMA or FDMA.

In FIG. 6, the states of a mobile station in a mobile terminated call are briefly illustrated. The states are summarized herein and explained more fully in the aforementioned document IS-95-A, pages 6-160 to 6-161.

The progression of the hard handoff procedure is dependent on the state of the mobile station. Referring to FIG. 6, in a mobile station terminated call, the mobile is in the Traffic Channel Initialization State, shown by block **50,** when a traffic channel has been established between a mobile station and a base station. Upon receipt of a Base Station Acknowledgment Order from the base station, the mobile moves into the Waiting For Order State, shown by block **52.** The mobile station then transitions into the Waiting For Answer State, illustrated by block **54,** when it receives an Alert With Information Message from the base station. When the mobile station subscriber answers the call by pushing a specific key on the mobile station keypad, the mobile transitions into the Conversation State, represented by block **56.** The mobile transitions into the Release State, shown by block **58,** when conversation terminates.

According to the current procedure, a mobile station should be in the Waiting For Answer State **54** or the Conversation State **56** during hard handoff. If the mobile is in any other state, the call is likely to be dropped during hard handoff. Thus, the mobile station must receive an Alert With Information Message transmitted by the base station on the Air-Interface before the mobile station undertakes handoff. Otherwise, the handoff procedure would be unreliable. Referring again to FIG. 5, assume that MS **42** is in the coverage area of BS1 **44.** If MS **42** subsequently moves from the coverage area of BS1 **44** to the coverage area of BS2 **46** while MS **42** is in the Waiting For Order State **52,** MS **42** may not receive the Alert With Information Message sent by BS1 **44.** Without receiving the Alert With Information Message, MS **42** cannot transition into the Waiting For Answer State **54** in the coverage area of BS2 **46.** As a result, the call will be dropped while handoff is in progress. Thus, the present invention recognizes that a better method for handling hard handoff in a mobile station terminated call is necessary.

As previously described, providing an Alert With Information Message on the A-Interface overcomes the shortcomings in the call waiting procedure. The present invention recognizes that providing an Alert With Information Message on the A-Interface will also overcome the shortcomings in a hard handoff procedure in a mobile station terminated call. Further, it should be understood that the present invention applies to hard handoff procedures in a variety of communication environments, including CDMA, TDMA, or FDMA.

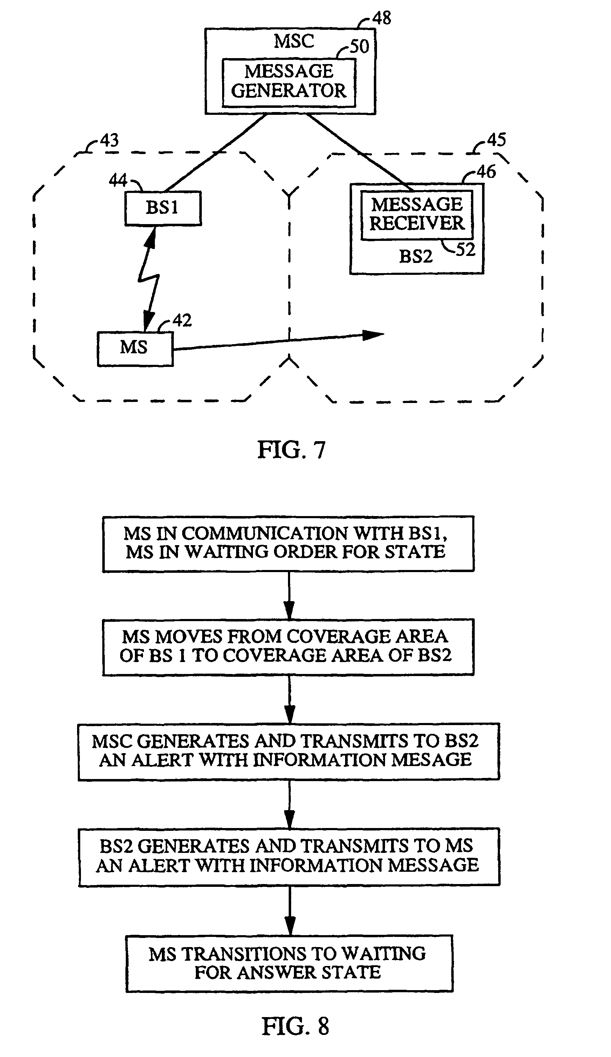

A preferred embodiment of the use of an Alert With Information Message on the A-Interface in a hard handoff procedure is illustrated in FIG. 7 with reference to FIG. 6. An Alert With Information Message is generated by message generator **50** in MSC **48** and sent to message receiver **52** in BS2 **46.** The Alert With Information Message is sent on the A-Interface when MS **42** is moving from the coverage area of BS1 **44** to the coverage area of BS2 **46** while in the Waiting For Order State. After BS2 **46** receives the Alert With Information Message from MSC **48,** BS2 **46** then sends an Alert With Information Message to MS **42** on the Air-Interface. Having received the Alert With Information Message, MS **42** can transition into the Waiting For Answer State **54** while in the coverage area of BS2 **46,** and handoff can occur without the call being dropped. Thus, by providing for an Alert With Information Message on the A-Interface, MSC **48** has better control of the hard handoff procedure. Since MSC **48** can send the Alert With Information Message to BS2 **46,** causing BS2 **46** to send the Alert With Information Message to MS **42,** MS **42** does not need to rely on receiving the Alert With Information Message from BS1 **44** in order to transition into the Waiting For Answer State **54.** Consequently, handoff can occur without the call being dropped. A flow chart illustrating some of the processing steps involved in hard handoff as described in the embodiment above is shown in FIG. 8.

Still another procedure in which deficiencies are recognized on the A-Interface is the handling of a glare condition. A glare condition may occur when a mobile subscriber attempts to initiate a call while another party is attempting to call the mobile subscriber. A call initiated by a mobile subscriber is referred to as a mobile station originated call, while a call made to a mobile subscriber is referred to as a mobile station terminated call.

The glare condition may be better understood by referring back to FIG. 1. In a mobile station originated call, an Origination Message is transmitted from a mobile station, such as MS **16,** to a base station, such as BS **12,** upon initiation of a call by MS **16.** After transmission of the Origination Message but before a connection is established between MS **16** and the called party (party A of PSTN **11**), another party (party B of PSTN **11**) may attempt to contact the mobile subscriber and MSC **10** may page MS **16,** resulting in a glare condition. The Air-Interface standard, IS-95-A, permits MS **16** the option of aborting the call to party A and responding to the call from party B. MS **16** then follows the state transition sequence for a mobile station terminated call as illustrated in FIG. 6.

Referring now to FIG. 6, in a mobile station termination scenario, the mobile expects to receive an Alert With Information Message to transition from the Waiting For Order State, represented by block **52, to** the Waiting For Answer State, represented by block **54.** If the Alert With Information Message is not received, the mobile would time out and release the call.

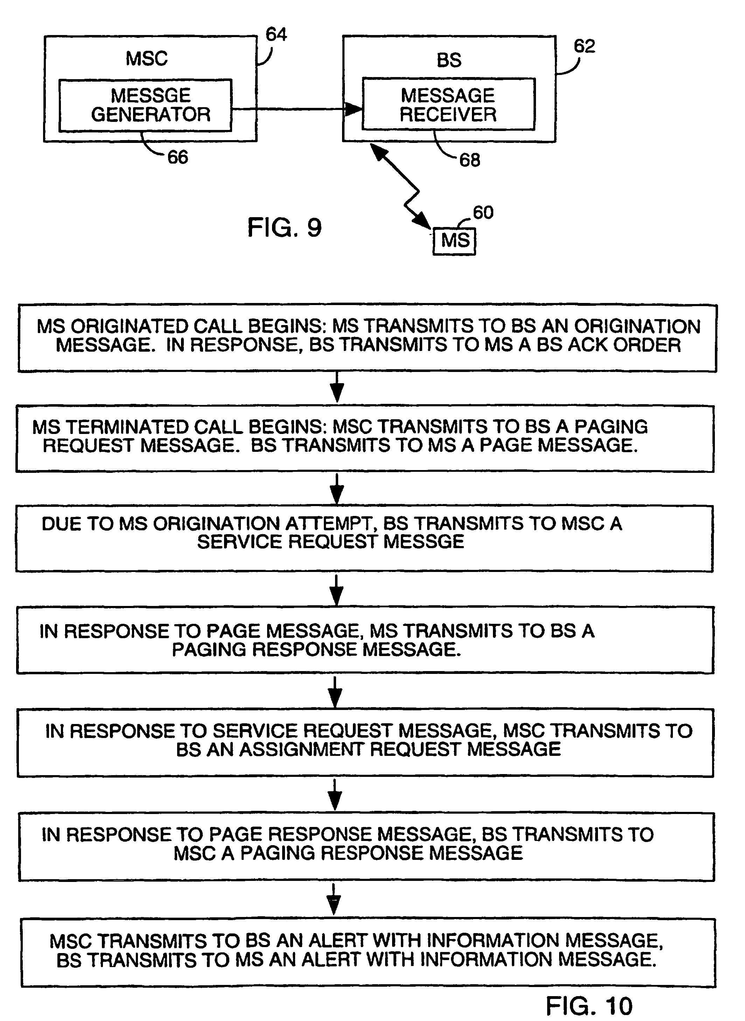

It is recognized by the present invention that current procedures under IS-95-A and IS-634 do not properly resolve the glare condition. Currently, the base station is not configured to transmit an Alert With Information Message to the mobile station upon occurrence of a glare condition. The problem is explained in greater detail with reference to FIG. 9. Referring to FIG. 9, when MS **60** originates a call, an Origination Message is sent from MS **60** to BS **62.** In response to the Origination Message, BS **62** transmits a BS Acknowledgment Order to MS **60.** Meanwhile, MSC **64** receives an incoming call to the same MS **60,** unaware of the origination effort in progress, and sends a Paging Request Message to BS 62 to initiate a mobile terminated call setup. BS **62** in turn sends a Page Message containing the MS address, and the Page Message is received by MS **60.**

Due to the mobile origination attempt, BS **62** constructs a Service Request Message and sends the message to MSC **64.** However, after receiving the Page Message, MS **60** aborts the origination call setup, and responds by transmitting a Paging Response Message, which is received by BS **62.** But because MSC **64** had received a Service Request Message from BS **62,** MSC **64** in response sends an Assignment Request Message to BS **62,** requesting assignment of Air-Interface resources for the mobile station originated call. Upon receipt of the Assignment Request Message, BS **62** assumes that a mobile station originated call is in progress, and does not transmit an Alert With Information Message to MS **60.** As a result, MS **60** times out waiting for the Alert With Information Message, and the mobile station terminated call is dropped.

In order to better resolve the glare condition, the present invention provides for still another use of the Alert With Information Message on the A-Interface. First, note that after BS **62** receives a Paging Response Message from MS **60,** BS **62** in turn sends a Paging Response Message to MSC **64.** Then, in a preferred embodiment, the present invention provides for an Alert With Information Message to be transmitted on the A-Interface if MSC **64** receives a Service Request Message and then a Paging Response Message. Still referring to FIG. 9, it can be seen that the Alert With Information Message may be generated in MSC **64** by message generator **66,** while the Alert With Information Message may be received in BS **62** by message receiver **68.** After BS **62** receives the Alert With Information Message from MSC **64,** BS **62** then sends an Alert With Information Message to MS **60** on the Air-Interface. Having received the Alert With Information Message, MS 60 can transition into the Waiting For Answer State, and the glare condition is resolved without the call being dropped.

Referring now to FIG. 10, a flow chart illustrating some of the processing steps involved in the resolution of the glare condition as discussed with reference to FIG. 9 is shown. An Alert With Information Message is provided on the A-Interface to resolve the glare condition.

The present invention recognizes that for the call waiting, hard handoff, and resolution of a glare condition procedures, there are certain deficiencies in call processing on the A-Interface as currently defined by IS-634. By providing an Alert With Information Message on the A-Interface, the present invention overcomes these deficiencies. The Alert With Information Message is already available on the Air-Interface under IS-95-A to cause a mobile station to transition from the Waiting For Order State to the Waiting For Answer State. An Alert With Information Message is provided on the A-Interface to trigger the transmittal of the Alert With Information Message on the Air-Interface, solving the problems of the call-waiting and handoff procedures as well as resolving the glare condition.

The previous description of the preferred embodiments is provided to enable any person skilled in the art to make or use the present invention. The various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded the widest scope as defined by the claims.

## Claims

1. A cellular communication system, comprising:
a mobile station (32);
a first base station (34) in communication with said mobile station (32) via an Air-Interface, said first base station (34) defining a first cellular coverage area;
a mobile switching center (36) in communication with said first base station (34) via an A-Interface;
a message generator (38) at said mobile switching center (36) for generating an alert with information message signal for transmission to said first base station (34) on said A-Interface;
a message receiver (40) at said first base station (34) for receiving said alert with information message signal, wherein upon receipt of said alert with information message signal, said first base station (34) transmits a subsequent alert with information message signal to said mobile station (32) on said Air-Interface; and
a first party (28) in a first network, **characterised by**:
a second party (30) in a second network, said first and second parties (28,30) being in communication with said mobile station (32) in a call waiting procedure; and in that:
said second network generates a release message indicative of the termination of communication of said second party (30) with said mobile station (32), said release message being transmitted to said mobile switching center (36) to cause said message generator (38) at said mobile switching center (36) to generate said alert with information message signal.

2. The cellular communication system of claim 1, wherein immediately prior to the generation of said release message only said second party (30) is in active communication with said mobile station (32).

3. A method for messaging between a mobile switching center (36) and a base station (34), the method comprising:
generating (38) an alert with information message signal in said mobile switching center (36);
transmitting said alert with information message signal to said base station (34) on an A-Interface, wherein upon receipt of said alert with information message signal, said base station (34) transmits a subsequent alert with information message signal to a mobile station (32) on an Air-Interface; and
establishing communication between a first party (28) and said mobile station (32) via said mobile switching center (36) and said base station (34),
**characterised by**:
establishing communication between a second party (30) and said mobile station (32) via said mobile switching center (36) and said base station (34) while putting said first party (28) on hold;
generating a release message m a network servicing said second party (30) to indicate that said second party (30) is terminating communication with said mobile station (32), said release message being transmitted to said mobile switching center (36); and in that:
said alert with information message signal is generated responsive to receipt of said release message by said mobile switching center (36).

4. The method of claim 3, further comprising:
generating a connect message in said mobile station (32) responsive to receipt of said subsequent alert with information message signal; and
transmitting said connect message to said mobile switching center (36) via said base station (34), whereupon said mobile switching center (36) reestablishes communication between said first party (28) and said mobile station (32).

5. The method of any of claim 3 or 4, wherein said base station (34) is a CDMA base station.

6. A telecommunications messaging system, comprising:
a message generator (66) in a mobile switching center (64) for generating an alert with information message signal for transmission to a base station (62) for triggering said base station (62) to transmit a subsequent alert with information message signal to a mobile station (60); and
a message receiver (68) in said base station (62) for receiving said alert with information message signal, **characterised in that**:
said alert with information message signal is generated upon detection of a glare condition by said mobile switching center (64).

7. The system of claim 6, wherein said glare condition is detected when said mobile switching center (64) receives a message indicative of a mobile station (60) call origination and a message indicative of a mobile station (60) call termination in quick succession.

8. The system of claim 7, wherein said messaging indicative of a mobile station (60) call origination is a Service Request Message and said message indicative of a mobile station (60) call termination is a Paging Response Message.

9. A method for messaging between a mobile switching center (64) and a base station (62), the method comprising:
generating (66) an alert with information message signal in said mobile switching center (64); and
transmitting said alert with information message signal to said base station (62) on an A-Interface, wherein upon receipt of said alert with information message signal, said base station (62) transmits a subsequent alert with information message signal to a mobile station (60) on an Air-Interface,
**characterised by**:
detecting the occurrence of a glare condition; and in that:
said generating (66) is based on a positive result of said detecting.

10. The method of claim 9, wherein said detecting comprises:
determining if a message indicative of a mobile station (60) call origination is received at said mobile switching center (64); and
determining if a message indicative of a mobile station (60) call termination is received at said mobile switching center (64).

11. The method of claim 10, wherein said message indicative of a mobile station (60) call origination is a Service Request Message and said message indicative of a mobile station (60) call termination is a Paging Response message.

12. A cellular communication system, comprising:
a mobile station (42);
a first base station (46) in communication with said mobile station (42) via an Air-Interface, said first base station (46) defining a first cellular coverage area;
a mobile switching center (48) in communication with said first base station (46) via an A-Interface;
a message generator (50) at said mobile switching center (48) for generating an alert with information message signal for transmission to said first base station (46) on said A-Interface;
a message receiver (52) at said first base station (46) for receiving said alert with information message signal, wherein upon receipt of said alert with information message signal, said first base station (46) transmits a subsequent alert with information message signal to said mobile station (42) on said Air-Interface; and
a second base station (44) defining a second cellular coverage area,
**characterised in that**:
said alert with information message signal is generated and sent to said first base station (46) while said mobile station (42) is moving from said second cellular coverage area to said first cellular coverage area and while the call processing state of said mobile station (42) is a waiting for order state;
said mobile station (42) is in hard handoff with said first and second base stations (46,44); and
upon receipt of said subsequent alert with information message signal by said mobile station (42), said mobile station (42) transitions into a waiting for answer state while said mobile station (42) is in said first cellular coverage area.

13. A method for messaging between a mobile switching center (48) and a base station (46), the method comprising:
generating (50) an alert with information message signal in said mobile switching center (48); and
transmitting said alert with information message signal to said base station (46) on an A-Interface, wherein upon receipt of said alert with information message signal, said base station (46) transmits a subsequent alert with information message signal to a mobile station (42) on an Air-Interface,
**characterised by**:
establishing communication between a previous base station (44) and said mobile station;
processing a call between said previous base station and said mobile station (42) such that said mobile station (42) is in a waiting for order state;
after receipt of said subsequent alert with information message signal by said mobile station (42), transitioning said mobile station (42) into a waiting for answer state while said mobile station (42) is in the coverage area of said base station (46); and in that:
said alert with information message signal is generated (50) by said mobile switching center (48) and sent to said base station (46) while said mobile station (42) moves from said previous base station (44) to said base station (46) while in said waiting for order state; and
said mobile station (42) is in hard handoff with said previous base station (44) and said base station (46).

## Patentansprüche

1. Ein zellulares Kommunikationssystem, das Folgendes aufweist:
eine Mobilstation (32);
eine erste Basisstation (34) in Kommunikation bzw. Nachrichtenverbindung mit der Mobilstation (32) über eine Luftschnittstelle, wobei die erste Basisstation (34) em erstes zellulares Abdeckungsgebiet definiert;
ein Mobilvermittlungszentrum bzw. eine Mobilvermittlungsanlage (36) in Kommunikation mit der genannten ersten Wartestation (34) über ein A-Interface bzw. eine A-Schnittstelle;
ein Nachrichtengenerator (38) bei dem genannten Mobilvermittlungszentrum (36) zum Erzeugen einer Warnung bzw. einer Warnmeldung mit Informationsnachrichtensignal zum Übertragen bzw. Senden an die genannte erste Basisstation (34) auf dem genannten A-Interface;
ein Nachrichtenempfänger (40) bei der genannten Basisstation (34) zum Empfangen der Warnung mit Informationsnachrichtensignal, wobei aufgrund des Empfangs der genannten Warnung mit Informationsnachrichtensignal die genannte erste Basisstation (34) eine nachfolgende Warnung mit Informationsnachrichtensignal an die genannte Mobilstation (32) auf der genannten Luftschnittstelle überträgt; und
eine erste Gruppe bzw. Partei (28) in einem ersten Netzwerk **gekennzeichnet durch**:
eine zweite Gruppe (30) in einem zweiten Netzwerk, wobei die genannte erste und zweite Gruppe (28, 30) in Kommunikation mit der genannten Mobilstation (32) ist, und zwar in einer Anruf- bzw. Rufwarteprozedur, und **dadurch** dass:
das genannte zweite Netzwerk eine Freigabenachricht (release message) erzeugt, die die Terminierung von Kommunikation der genannten zweiten Gruppe (30) mit der genannten Mobilstation (32) anzeigt, wobei die Freigabenachricht an das genannten Mobilvermittlungszentrum (36) übertragen wird, um den genannten Nachrichtengenerator (38) bei dem genannten Mobilvermittlungszentrum (36) zu veranlassen, die genannte Warnung mit Informationsnachrichtensignal zu erzeugen.

2. Zellulares Kommunikationssystem nach Anspruch 1, wobei unmittelbar vor der Erzeugung der genannten Freigabenachricht nur die genannte zweite Gruppe (30) in aktiver Kommunikation mit der genannten Mobilstation (32) ist.

3. Ein Verfahren zum Austauschen von Nachrichten (messaging) zwischen einem Mobilvermittlungszentrum (36) und einer Basisstation (34), wobei das Verfahren Folgendes aufweist:
Erzeugen (38) einer Warnung bzw. Warnmeldung mit Informationsnachrichtensignal in dem genannten Mobilvermittlungszentrum (36);
Übertragen der genannten Warnung mit Informationsnachrichtensignal an die genannte Basisstation (34) auf einem A-Interface bzw. einer A-Schnittstelle, wobei nach bzw. aufgrund des Empfangs der genannten Warnung mit Informationsnachrichtensignal, die genannte Basisstation (34) eine nachfolgende Warnung mit Informationsnachrichtensignal an eine Mobilstation (32) auf einer Luftschnittstelle überträgt; und
Herstellen einer Kommunikation zwischen einer ersten Gruppe (28) und der genannten Mobilstation (32) über das genannte Mobilvermittlungszentrum (36) und die genannte Basisstation (34), **gekennzeichnet durch**:
Herstellen einer Kommunikation zwischen einer zweiten Gruppe (30) und der genannten Mobilstation (32) über das genannte Mobilvermittlungszentrum (36) und die genannte Basisstation (34), während die genannte erste Gruppe (28) auf Halten gestellt wird;
Erzeugen einer Lose- bzw. Freigabenachricht (release message) in einem Netzwerk, das die genannte zweite Gruppe (30) versorgt, um anzuzeigen, dass die genannte zweite Gruppe (30) Kommunikation mit der genannten Mobilstation (32) terminiert, wobei die genannte Freigabenachricht an das genannte Mobilvermittlungszentrum (36) übertragen wird, und **dadurch** dass
die genannte Warnung mit Informationsnachrichtensignal ansprechend auf den Empfang der genannten Freigabenachricht **durch** das genannte Mobilvermittlungszentrum (36) erzeugt wird

4. Verfahren nach Anspruch 3, das ferner Folgendes aufweist:
Erzeugen einer Verbunden-Nachricht (connect message) in der genannten Mobilstation (32) und zwar ansprechend auf den Empfang der genannten nachfolgenden Warnung mit Informationsnachrichtensignal; und
Übertragen der Verbunden-Nachricht an das genannte Mobilvermittlungszentrum (36) über die genannte Basisstation (34), woraufhin das genannte Mobilvermittlungszentrum (36) Kommunikation zwischen der genannten ersten Gruppe (28) und der genannten Mobilstation (32) wiederherstellt.

5. Verfahren nach einem der Ansprüche 3 oder 4, wobei die genannte Basisstation (34) eine CDMA-Basisstation ist.

6. Ein Telekommunikationsnachrichtenaustausch-(messaging)-System das Folgendes aufweist:
einen Nachrichtengenerator (66) in einem Mobilvermittlungszentrum (64) zum Erzeugen eines Warnsignals mit Informationsnachricht zur Übertragung an eine Basisstation (62) zum Anstoßen (triggering) der genannten Basisstation (62) zum Übertragen eines nachfolgenden Warnsignals mit Informationsnachricht an eine Mobilstation (60) und
ein Nachrichtenempfänger (68) in der genannten Basisstation (62) zum Empfangen des genannten Warnsignals mit Informationsnachricht, **gekennzeichnet dadurch dass**:
das genannte Warnsignal mit Informationsnachricht aufgrund einer Detektion einer Strahlbedingung (glare condition) durch das genannte Mobilvermittlungszentrum (64) erzeugt wird.

7. System nach Anspruch 6, wobei die genannte Strahlbedingung detektiert wird, wenn das genannte Mobilvermittlungszentrum (64) in schneller Abfolge Folgendes empfängt: eine Nachricht, die eine Rufveranlassung bzw. Rufherkunft (call origination) einer Mobilstation (60) anzeigt und eine Nachricht, die eine Rufterminierung der Mobilstation (60) anzeigt.

8. System nach Anspruch 7, wobei der genannte Nachrichtenaustausch der eine Rufveranlassung der Mobilstation (60) anzeigt, eine Dienstanfragenachricht (Service Request Message) ist und die genannte Nachricht, die eine Rufterminierung der Mobilstation (60) anzeigt, eine Rundrufantwortnachricht (Paging Response Message) ist.

9. Ein Verfahren zum Nachrichtenaustausch zwischen einem Mobilvermittlungszentrum (64) und einer Basisstation (62), wobei das Verfahren Folgendes aufweist:
Erzeugen (66) eines Warnsignals mit Informationsnachricht in dem genannten Mobilvermittlungszentrum (64); und
Übertragen des genannten Warnsignals mit Informationsnachricht an die genannte Basisstation (62) über ein A-Interface bzw. eine A-Schnittstelle, wobei aufgrund des Empfangs des genannten Warnsignals mit Informationsnachricht die genannte Basisstation (62) ein nachfolgendes Warnsignal mit Informationsnachricht an eine Mobilstation (60) auf einer Luftschnittstelle überträgt, **gekennzeichnet durch**:
Detektieren des Auftretens einer Strahlbedingung (glare condition); und **dadurch** dass
das genannte Erzeugen (66) auf einem positiven Ergebnis des genannten Detektierens basiert.

10. Verfahren nach Anspruch 9, wobei das genannte Detektieren Folgendes aufweist.
Bestimmen, ob eine Nachricht, die anzeigt, dass eine Rufveranlassung der Mobilstation (60) bei dem genannten Mobilvermittlungszentrum (64), empfangen wird; und
Bestimmen, ob eine Nachricht, die anzeigt, dass eine Rufterminierung der Mobilstation (60) an dem genannten Mobilvermittlungszentrum (64), empfangen wird.

11. Verfahren nach Anspruch 10, wobei die genannte Nachricht, die eine Rufveranlassung der Mobilstation (60) anzeigt, eine Dienstanfragenachricht (Service Request Message) ist und die genannte Nachricht, die eine Rufterminierung der Mobilstation (60) anzeigt, eine Rundrufantwortnachricht (Paging Response message) ist.

12. Ein zellulares Kommunikationssystem, das Folgendes aufweist:
eine Mobilstation (42),
eine erste Basisstation (46) in Kommunikation mit der genannten Mobilstation (42) über eine Luftschnittstelle, wobei die erste Basisstation (46) ein erstes zellulares Abdeckungsgebiet definiert;
ein Mobilvermittlungszentrum (48) in Kommunikation mit der genannten ersten Basisstation (46) über eine A-Schnittstelle bzw. A-Interface;
ein Nachrichtengenerator (50) bei dem genannten Mobilvermittlungszentrum (48) zum Erzeugen eines Warnsignals mit Informationsnachricht, und zwar zur Übertragung an die genannte erste Basisstation (46) über das genannte A-Interface;
ein Nachrichtenempfänger (52) bei der genannten ersten Basisstation (46) zum Empfangen des genannten Warnsignals mit Informationsnachricht, wobei aufgrund des Empfangs des genannten Warnsignals mit Informationsnachricht die genannte erste Basisstation (46) ein nachfolgendes Warnsignal mit Informationsnachricht an die genannte Mobilstation (42) auf der genannten Luftschnittstelle überträgt, und
eine zweite Basisstation (44), die ein zweites zellulares Abdeckungsgebiet definiert, **gekennzeichnet dadurch dass**:
das genannte Warnsignal mit Informationsnachricht erzeugt und an die genannte erste Basisstation (46) gesendet wird und zwar während die genannte Mobilstation (42) sich von dem genannten zweiten zellularen Abdeckungsgebiet zu dem genannten ersten zellularen Abdeckungsgebiet bewegt und während der Rufverarbeitungszustand der genannten Mobilstation (42) auf einen Befehlszustand (order state) wartet;
die genannte Mobilstation (42) sich in harter Weitergabe (hard handoff) mit den genannten ersten und zweiten Basisstationen (46, 44) befindet; und
aufgrund des Empfangs des genannten nachfolgenden Warnsignals mit Informationsnachricht durch die genannte Mobilstation (42), die genannte Mobilstation (42) in einen Warten-auf-Antwort-Zustand (waiting for answer state) übergeht, während die genannte Mobilstation (42) in dem ersten zellularen Abdeckungsgebiet ist.

13. Ein Verfahren zum Nachrichtenaustausch zwischen einem Mobilvermittlungszentrum (48) und einer Basisstation (46), wobei das Verfahren Folgendes aufweist:
Erzeugen (50) eines Warnsignals mit Informationsnachricht in dem genannten Mobilvermittlungszentrum (48); und
Übertragen des genannten Warnsignals mit Informationsnachricht an die genannte Basisstation (46) auf einem A-Interface bzw. A-Schnittstelle, wobei aufgrund des Empfangs des genannten Warnsignals mit Informationsnachricht die genannte Basisstation (46) ein nachfolgendes Warnsignal mit Informationsnachricht an eine Mobilstation (42) auf einer Luftschnittstelle überträgt, **gekennzeichnet durch**:
Herstellen von Kommunikation zwischen einer vorhergehenden Basisstation (44) und der genannten Mobilstation;
Verarbeiten eines Rufs zwischen der genannten vorhergehenden Basisstation und der genannten Mobilstation (42), so dass die genannte Mobilstation (42) in einem Warten-auf-Befehl-(waiting for order)-Zustand ist,
nach dem Empfang des nachfolgenden Warnsignals mit Informationsnachricht **durch** die genannte Mobilstation (42) Übergehen der genannten Mobilstation (42) in einen Warten-auf-Antwort-(waiting for answer)-Zustand, während die genannte Mobilstation (42) in dem Abdeckungsgebiet der Basisstation (46) ist; und
**dadurch** dass
das genannte Warnsignal mit Informationsnachricht **durch** das genannte Mobilvermittlungszentrum (48) generiert wird (50) und an die genannte Basisstation (46) gesendet wird, und zwar während sich die genannte Mobilstation (42) von der genannten vorhergehenden Basisstation (44) zu der genannten Basisstation (46) bewegt, während sie in dem genannten Warte-auf-Befehl-Zustand ist, und
die genannte Mobilstation (42) in einer harten Weitergabe (hard handoff) mit der genannten vorhergehenden Basisstation (44) und der genannten Basisstation (46) ist.

## Revendications

1. Système de communication cellulaire, comprenant :
une station mobile (32) ;
une première station de base (34) en communication avec ladite station mobile (32) via une Interface Radio, ladite première station de base (34) définissant une première zone de couverture cellulaire ;
un centre de commutation mobile (36) en communication avec ladite première station de base (34) via une Interface R ;
un générateur de message (38) dans ledit centre de commutation mobile (36) pour générer une alerte avec un signal de message d'information destinés à être transmis à ladite première station de base (34) sur ladite Interface R ;
un récepteur de message (40) dans ladite première station de base (34) pour recevoir ladite alerte avec signal de message d'information, dans lequel, lors de la réception de ladite alerte avec signal de message d'information, ladite première station de base (34) transmet une alerte suivante avec signal de message d'information à ladite station mobile (32) sur ladite Interface Radio ; et
un premier correspondant (28) dans un premier réseau,
**caractérisé par** :
un deuxième correspondant (30) dans un deuxième réseau, lesdits premier et deuxième correspondants (28, 30) étant en communication avec ladite station mobile (32) dans une procédure d'attente d'appel ; et en ce que :
ledit deuxième réseau génère un message de libération indiquant la fin de communication dudit deuxième correspondant (30) avec ladite station mobile (32), ledit message de libération étant transmis audit centre de commutation mobile (36) pour faire générer par ledit générateur de message (38) dans ledit centre de commutation mobile (36) ladite alerte avec signal de message d'information.

2. Système de communication cellulaire selon la revendication 1, dans lequel, juste avant la génération dudit message de libération, seul ledit deuxième correspondant (30) est en communication active avec ladite station mobile (32).

3. Procédé de messagerie entre un centre de commutation mobile (36) et une station de base (34), le procédé comprenant les étapes consistant à :
générer (38) une alerte avec signal de message d'information dans ledit centre de commutation mobile (36) ;
transmettre ladite alerte avec signal de message d'information à ladite station de base (34) sur une Interface R, où lors de la réception de ladite alerte avec signal de message d'information, ladite station de base (34) transmet une alerte suivante avec signal de message d'information à une station mobile (32) sur une Interface Radio ; et
établir une communication entre un premier correspondant (28) et ladite station mobile (32) via ledit centre de commutation mobile (36) et ladite station de base (34), **caractérisé par** les étapes consistant à :
établir une communication entre un deuxième correspondant (30) et ladite station mobile (32) via ledit centre de commutation mobile (36) et ladite station de base (34) tout en mettant ledit premier correspondant (28) en attente ;
générer un message de libération dans un réseau servant ledit deuxième correspondant (30) pour indiquer que ledit deuxième correspondant (30) termine sa communication avec ladite station mobile (32), ledit message de libération étant transmis audit centre de commutation mobile (36) ; et en ce que :
ladite alerte avec signal de message d'information est générée en réponse à la réception dudit message de libération par ledit centre de commutation mobile (36).

4. Procédé selon la revendication 3, comprenant en outre les étapes consistant à :
générer un message de connexion dans ladite station mobile (32) en réponse à la réception de ladite alerte suivante avec signal de message d'information ; et
transmettre ledit message de connexion audit centre de commutation mobile (36) via ladite station de base (34), après quoi ledit centre de commutation mobile (36) rétablit la communication entre ledit premier correspondant (28) et ladite station mobile (32).

5. Procédé selon la revendication 3 ou 4, dans lequel ladite station de base (34) est une station de base CDMA.

6. Système de messagerie de télécommunications, comprenant :
un générateur de message (66) dans ledit centre de commutation mobile (64) pour générer une alerte avec un signal de message d'information destinés à être transmis à une station de base (62) pour déclencher la transmission par ladite station de base (62) d'une alerte suivante avec signal de message d'information à une station mobile (60) ; et
un récepteur de message (68) dans ladite station de base (62) pour recevoir ladite alerte avec signal de message d'information,
**caractérisé en ce que** :
ladite alerte avec signal de message d'information est générée lors de la détection d'une condition d'éblouissement par ledit centre de commutation mobile (64).

7. Système selon la revendication 6, dans lequel ladite condition d'éblouissement est détectée lorsque ledit centre de commutation mobile (64) reçoit un message indiquant l'émission d'un appel d'une station mobile (60) et un message indiquant la fin d'un appel d'une station mobile (60) en succession rapide.

8. Système selon la revendication 7, dans lequel ledit message indiquant l'émission d'un appel d'une station mobile (60) est un Message de Demande de Service et ledit message indiquant la fin d'un appel d'une station mobile (60) est un Message de Réponse par Téléavertissement.

9. Procédé de messagerie entre un centre de commutation mobile (64) et une station de base (62), le procédé comprenant les étapes consistant à :
générer (66) une alerte avec signal de message d'information dans ledit centre de commutation mobile (64) ; et
transmettre ladite alerte avec signal de message d'information à ladite station de base (62) sur une Interface R, où lors de la réception de ladite alerte avec signal de message d'information, ladite station de base (62) transmet une alerte suivante avec signal de message d'information à une station mobile (60) sur une Interface Radio ; **caractérisé par** le fait de :
détecter l'apparition d'une condition d'éblouissement ; et en ce que :
ladite génération (66) est basée sur un résultat positif de ladite détection.

10. Procédé selon la revendication 9, dans lequel ladite détection comprend les opérations consistant à :
déterminer si un message indiquant l'émission d'un appel d'une station mobile (60) est reçu dans ledit centre de commutation mobile (64) ; et
déterminer si un message indiquant la fin d'un appel d'une station mobile (60) est reçu dans ledit centre de commutation mobile (64).

11. Procédé selon la revendication 10, dans lequel ledit message indiquant l'émission d'un appel d'une station mobile (60) est un Message de Demande de Service et ledit message indiquant la fin d'un appel d'une station mobile (60) est un Message de Réponse par Téléavertissement.

12. Système de communication cellulaire, comprenant :
une station mobile (42) ;
une première station de base (46) en communication avec ladite station mobile (42) via une Interface Radio, ladite première station de base (46) définissant une première zone de couverture cellulaire ;
un centre de commutation mobile (48) en communication avec ladite première station de base (46) via une Interface R ;
un générateur de message (50) dans ledit centre de commutation mobile (48) pour générer une alerte avec un signal de message d'information destinés à être transmis à ladite première station de base (46) sur ladite Interface R ;
un récepteur de message (52) dans ladite première station de base (46) pour recevoir ladite alerte avec signal de message d'information, dans lequel, lors de la réception de ladite alerte avec signal de message d'information, ladite première station de base (46) transmet une alerte suivante avec signal de message d'information à ladite station mobile (42) sur ladite Interface Radio ; et
une deuxième station de base (44) définissant une deuxième zone de couverture cellulaire, **caractérisé en ce que** :
ladite alerte avec signal de message d'information est générée et envoyée à ladite première station de base (46) pendant que ladite station mobile (42) se déplace de ladite deuxième zone de couverture cellulaire à ladite première zone de couverture cellulaire et tant que l'état de traitement d'appel de ladite station mobile (42) est un état d'attente de commande ;
ladite station mobile (42) est en transfert intercellulaire avec coupure avec lesdites première et deuxième stations de base (46, 44) ; et
lors de la réception de ladite alerte suivante avec signal de message d'information par ladite station mobile (42), ladite station mobile (42) effectue une transition dans un état d'attente de réponse pendant que ladite station mobile (42) est dans ladite première zone de couverture cellulaire.

13. Procédé de messagerie entre un centre de commutation mobile (48) et une station de base (46), le procédé comprenant les étapes consistant à :
générer (50) une alerte avec signal de message d'information dans ledit centre de commutation mobile (48) ; et
transmettre ladite alerte avec signal de message d'information à ladite station de base (46) sur une Interface R, où lors de la réception de ladite alerte avec signal de message d'information, ladite station de base (46) transmet une alerte suivante avec signal de message d'information à une station mobile (42) sur une Interface Radio ; **caractérisé par** le fait de :
établir une communication entre une station de base précédente (44) et ladite station mobile ;
traiter un appel entre ladite station de base précédente et ladite station mobile (42) de telle manière que ladite station mobile (42) se retrouve dans un état d'attente de commande ;
après réception de ladite alerte suivante avec signal de message d'information par ladite station mobile (42), mettre ladite station mobile (42) dans un état d'attente de réponse pendant que ladite station mobile (42) est dans la zone de couverture de ladite station de base (46) ; et en ce que :
ladite alerte avec signal de message d'information est générée (50) par ledit centre de commutation mobile (48) et envoyée à ladite station de base (46) pendant que ladite station mobile (42) se déplace de ladite station de base précédente (44) à ladite station de base (46) tant qu'elles est dans ledit état d'attente de commande ; et
ladite station mobile (42) est en transfert intercellulaire avec coupure avec ladite station de base précédente (44) et avec ladite station de base (46).
